# EUROPÄISCHE PATENTSCHRIFT

(11) **EP 3 224 118 B1**
(45) Veröffentlichungstag und Bekanntmachung des Hinweises auf die Patenterteilung: **25.12.2019**
(21) Anmeldenummer: 15784661.9
(22) Anmeldetag: 22.10.2015
(51) Int. Cl.: B62D 15/02, G08G 1/14, B60W 30/06, G01C 21/36, G05D 1/00, G05D 1/02, H04W 84/00, H04L 29/08

(54) **VERFAHREN UND VORRICHTUNG ZUM ASSISTIERTEN FÜHREN EINES FAHRZEUGS**
METHOD AND DEVICE FOR ASSISTED DRIVING OF A VEHICLE
PROCÉDÉ ET DISPOSITIF DE CONDUITE ASSISTÉE D'UN VÉHICULE

(30) Priorität: 26.11.2014 DE 102014224077
(43) Veröffentlichungstag der Anmeldung: 04.10.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/074489
(87) Internationale Veröffentlichungsnummer: WO 2016/083038

(56) Entgegenhaltungen:
- US-A1- 2010 156 672
- US-A1- 2012 188 100

## Beschreibung

Die Erfindung betrifft ein Verfahren und eine Vorrichtung zum assistierten Führen eines Fahrzeugs. Die Erfindung betrifft ferner ein Verfahren und eine Vorrichtung zum Betreiben eines Fahrzeugs. Die Erfindung betrifft ferner ein Parksystem für Fahrzeuge, ein Fahrzeug sowie ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Die Offenlegungsschrift US 2012/188100 A1 ist als nächstliegender Stand der Technik nach dem Oberbegriff der Ansprüche 1 und 10 zu sehen und zeigt ein System zum automatischen Parken eines Kraftfahrzeugs.

Die Offenlegungsschrift US 2010/156672 A1 zeigt ein Verfahren und ein System zum automatischen Parken eines Kraftfahrzeugs.

### Offenbarung der Erfindung

Die der Erfindung zugrunde liegende Aufgabe kann darin gesehen werden, ein Konzept bereitzustellen, mittels welchen eine effiziente autonome Fahrt eines Fahrzeugs auf einem Parkplatz ermöglicht ist.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum assistierten Führen eines Fahrzeugs bereitgestellt,
- wobei eine auf einem Parkplatz abzufahrende Solltrajektorie für das Fahrzeug abhängig von einem Fahrzeugtyp des Fahrzeugs ermittelt wird,
- wobei die ermittelte Solltrajektorie an das Fahrzeug über ein Kommunikationsnetzwerk gesendet wird,
- wobei eine digitale Karte des Parkplatzes an das Fahrzeug über das Kommunikationsnetzwerk gesendet wird,
- so dass das Fahrzeug basierend auf der Solltrajektorie und auf der digitalen Karte autonom auf dem Parkplatz fahren kann,
- wobei das Fahrzeug während seiner autonomen Fahrt auf dem Parkplatz mittels eines fahrzeugexternen Überwachungssystems überwacht wird.

Gemäß einem weiteren Aspekt wird eine Vorrichtung zum assistierten Führen eines Fahrzeugs bereitgestellt, umfassend:
- einen Prozessor, der ausgebildet ist, eine auf einem Parkplatz abzufahrende Solltrajektorie für das Fahrzeug abhängig von einem Fahrzeugtyp des Fahrzeugs zu ermitteln,
- eine Kommunikationsschnittstelle, die ausgebildet ist, die ermittelte Solltrajektorie und eine digitale Karte des Parkplatzes an das Fahrzeug über ein Kommunikationsnetzwerk zu senden, so dass das Fahrzeug basierend auf der Solltrajektorie und auf der digitalen Karte autonom auf dem Parkplatz fahren kann, und
- eine Steuerungseinrichtung zum Steuern eines fahrzeugexternen Überwachungssystems derart, dass das Fahrzeug während seiner autonomen Fahrt auf dem Parkplatz mittels des fahrzeugexternen Überwachungssystems überwacht wird.

Nach noch einem Aspekt wird ein Verfahren zum Betreiben eines Fahrzeugs bereitgestellt,
- wobei das Fahrzeug über ein Kommunikationsnetzwerk eine auf einem Parkplatz abzufahrende und von einem Fahrzeugtyp des Fahrzeugs abhängige Solltrajektorie und eine digitale Karte des Parkplatzes empfängt,
- wobei das Fahrzeug basierend auf der Solltrajektorie und auf der digitalen Karte autonom auf dem Parkplatz fährt.

Nach noch einem Aspekt wird eine Vorrichtung zum Betreiben eines Fahrzeugs bereitgestellt, umfassend:
- eine Kommunikationsschnittstelle, die ausgebildet ist, über ein Kommunikationsnetzwerk eine auf einem Parkplatz abzufahrende und von einem Fahrzeugtyp des Fahrzeugs abhängige Solltrajektorie und eine digitale Karte des Parkplatzes zu empfangen, und
- eine Führungseinrichtung zum Führen des Fahrzeugs, die ausgebildet ist, das Fahrzeug basierend auf der Solltrajektorie und auf der digitalen Karte autonom auf dem Parkplatz zu führen.

Nach noch einem Aspekt wird ein Parksystem für Fahrzeuge bereitgestellt, wobei das Parksystem einen Parkplatz und die Vorrichtung zum assistierten Führen eines Fahrzeugs umfasst.

Nach noch einem Aspekt wird ein Fahrzeug bereitgestellt, welches die Vorrichtung zum Betreiben eines Fahrzeugs umfasst.

Nach noch einem Aspekt wird ein Computerprogramm bereitgestellt, welches Programmcode zur Durchführung des Verfahrens zum assistierten Führen eines Fahrzeugs und/oder zum Betreiben eines Fahrzeugs umfasst, wenn das Computerprogramm auf einem Computer ausgeführt wird.

Die Erfindung umfasst also insbesondere den Gedanken, eine Solltrajektorie für das Fahrzeug in Abhängigkeit von dem Fahrzeugtyp des Fahrzeugs zu ermitteln. Das heißt also, dass konkret für das Fahrzeug eine auf das Fahrzeug zugeschnittene und optimale Solltrajektorie ermittelt wird, die das Fahrzeug auf dem Parkplatz abfahren soll. Es ist also erfindungsgemäß nicht vorgesehen, eine allgemeine gemeinsame Solltrajektorie für mehrere verschiedene Fahrzeuge zu ermitteln. Vielmehr wird für jedes einzelne Fahrzeug abhängig von seinem Fahrzeugtyp eine eigene Solltrajektorie ermittelt. Dadurch kann in vorteilhafter Weise eine Solltrajektorie für das Fahrzeug optimiert werden. Insbesondere können dadurch in vorteilhafter Weise Besonderheiten des konkret auf dem Parkplatz fahrenden Fahrzeugs berücksichtigt werden. Somit ist in vorteilhafter Weise insbesondere eine effiziente autonome Fahrt des Fahrzeugs auf dem Parkplatz ermöglicht.

Dadurch, dass dem Fahrzeug eine digitale Karte des Parkplatzes zur Verfügung gestellt wird, ist eine effiziente und vereinfachte autonome Fahrt des Fahrzeugs auf dem Parkplatz ermöglicht. Dies insbesondere deshalb, da das Fahrzeug nun seine Fahrt an eine Topografie des Parkplatzes anpassen kann. Insbesondere kann so in vorteilhafter Weise die digitale Karte Sensordaten einer Umfeldsensorik, mittels welcher das Fahrzeug sein Umfeld sensorisch erfasst, ergänzen. So kann zum Beispiel eine doppelte Überprüfung dahingehend stattfinden, ob an der Stelle, an der eine Umfeldsensorik eine Infrastruktur des Parkplatzes detektiert hat, auch tatsächlich eine solche Infrastruktur vorhanden ist. Dies insbesondere mittels eines Abgleichs mit der digitalen Karte.

Dadurch, dass das Fahrzeug während seiner autonomen Fahrt auf dem Parkplatz mittels eines fahrzeugexternen Überwachungssystems überwacht wird, wird insbesondere der technische Vorteil bewirkt, dass Fehler oder Probleme, die während der autonomen Fahrt auftreten können, erkannt werden können. Dadurch können in vorteilhafter Weise zum Beispiel geeignete Maßnahmen ergriffen werden, um diese Fehler oder Probleme zu beheben oder zu lösen.

Die Kombination der vorstehend genannten Merkmale und ihrer Vorteile bewirken einen synergetischen Effekt, insofern sie sich gegenseitig vorteilhaft effizient ergänzen und in ihrer Summe eine verbesserte und effiziente autonome Fahrt des Fahrzeugs auf dem Parkplatz ermöglichen. Durch die Summe dieser Maßnahmen kann in vorteilhafter Weise ein Kollisionsrisiko des Fahrzeugs mit anderen Objekten in seinem Umfeld deutlich reduziert oder sogar ganz vermieden werden.

Nach einer Ausführungsform umfasst das Kommunikationsnetzwerk ein WLAN-Netzwerk und/oder ein Mobilfunknetzwerk.

In einer Ausführungsform wird respektive ist eine Kommunikation über das Kommunikationsnetzwerk verschlüsselt.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers, auf dem Parkplatz navigiert oder fährt oder geführt wird. Das Fahrzeug fährt also selbstständig auf dem Parkplatz, ohne dass ein Fahrer hierfür das Fahrzeug steuern oder sich in dem Fahrzeug befinden müsste. Ein Führen umfasst insbesondere eine Quer- und/oder eine Längsführung des Fahrzeugs. Ein solch autonom fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Eine Abgabeposition im Sinne der vorliegenden Erfindung, ist eine Position, an welcher ein Fahrer des Fahrzeugs sein Fahrzeug für einen autonomen Parkvorgang abstellen kann und von dieser sein Fahrzeug zu einem späteren Zeitpunkt wieder abholen kann.

Eine Parkposition im Sinne der vorliegenden Erfindung ist eine Position, an welcher das Fahrzeug autonom parken soll.

Eine Abholposition im Sinne der vorliegenden Erfindung, ist eine Position, an welcher ein Fahrzeug nach einem Ende eines autonomen Parkvorgangs abholen kann.

Nach einer Ausführungsform ist die Abgabeposition gleich der Abholposition.

In einer Ausführungsform ist vorgesehen, dass das Fahrzeug autonom von der Abgabeposition zu der Parkposition navigiert oder fährt.

In einer weiteren Ausführungsform ist vorgesehen, dass das Fahrzeug autonom in die Parkposition einparkt.

In einer anderen Ausführungsform ist vorgesehen, dass das Fahrzeug autonom aus der Parkposition ausparkt.

Nach einer weiteren Ausführungsform ist vorgesehen, dass das Fahrzeug autonom von der Parkposition zu der Abholposition navigiert oder fährt.

Nach einer anderen Ausführungsform ist vorgesehen, dass die Solltrajektorie ferner abhängig von zumindest einem der folgenden Fahrzeugparameter ermittelt wird: Radstand, Höhe, Breite, Länge, Masse, Funktionsumfang eines Fahrerassistenzsystems, Funktionsumfang einer Umfeldsensorik, maximaler Radeinschlagwinkel, Wendekreis, Ungenauigkeit eines Fahrerassistenzsystems und Ungenauigkeit einer Umfeldsensorik.

Dadurch wird insbesondere der technische Vorteil bewirkt, dass die Solltrajektorie noch besser an das Fahrzeug angepasst werden kann. Somit kann eine verbesserte effiziente autonome Navigation des Fahrzeugs auf dem Parkplatz in vorteilhafter Weise ermöglicht werden.

Der Funktionsumfang einer Umfeldsensorik umfasst beispielsweise eine Reichweite eines Umfeldsensors. Also zum Beispiel eine Reichweite eines Videosensors, eines Radarsensors, eines Ultraschallsensors, eines Lasersensors oder eines Lidarsensors. So nimmt in der Regel eine Genauigkeit einer Kamera umfassend einen Videosensor mit der Entfernung ab.

Der Funktionsumfang einer Umfeldsensorik umfasst zum Beispiel eine Sensorempfindlichkeit eines Umfeldsensors.

Da in der Regel ein Fahrerassistenzsystem Umfeldsensordaten einer Umfeldsensorik für die Ausführung einer Fahrerassistenzfunktion verwendet, ist über den Funktionsumfang der Umfeldsensorik auch ein Funktionsumfang des Fahrerassistenzsystems definiert.

Der Funktionsumfang eines Fahrerassistenzsystems umfasst zum Beispiel eine Reaktionsgeschwindigkeit auf ein Ereignis, wie zum Beispiel das Auftreten eines Hindernisses.

Gemäß einer weiteren Ausführungsform sind mehrere Fahrzeugparameter vorgesehen.

Der Fahrzeugtyp umfasst nach einer Ausführungsform das Baujahr des Fahrzeugs.

Der Fahrzeugtyp umfasst nach einer weiteren Ausführungsform eine Herstellerkennung eines Herstellers des Fahrzeugs.

Nach einer anderen Ausführungsform ist vorgesehen, dass, wenn ein während der Fahrt auftretendes Problem detektiert wird, zumindest die folgenden Aktion (vorzugsweise zuerst das erfindungsgemäße Senden des Stoppsignals, dann erst das Ermitteln der neuen Solltrajektorie) durchgeführt werden:
- Ermitteln einer neuen Solltrajektorie und Übermitteln der neuen Solltrajektorie über das Kommunikationsnetzwerk an das Fahrzeug,

Dadurch wird insbesondere der technische Vorteil bewirkt, dass ein auftretendes Problem effizient gelöst werden kann. So kann zum Beispiel die neue Solltrajektorie unter Kenntnisnahme und unter Berücksichtigung des detektierten Problems, also basierend auf dem detektierten Problem, ermittelt werden. Das heißt, dass die neue Solltrajektorie das Problem berücksichtigt und entsprechend zu seiner Lösung oder Umgehung beitragen kann. Das Senden des Stoppsignals bewirkt insbesondere den technischen Vorteil, dass ein Kollisionsrisiko deutlich reduziert werden kann. Denn in der Regel stellt ein haltendes Fahrzeug ein deutlich geringeres Kollisionsrisiko oder Kollisionsgefährdung dar als ein fahrendes Fahrzeug. Das Fahrzeug stoppt also vorzugsweise ansprechend auf das Stoppsignal.

Nach einer Ausführungsform ist vorgesehen, dass das Problem mittels des Überwachungssystems detektiert wird.

Nach einer weiteren Ausführungsform ist vorgesehen, dass das Problem mittels des Fahrzeugs, insbesondere mittels einer Umfeldsensorik des Fahrzeugs, detektiert wird. Das detektierte Problem wird dann vorzugsweise vom Fahrzeug über das Kommunikationsnetzwerk an einen Teilnehmer des Kommunikationsnetzwerks gemeldet. Ein solcher Teilnehmer ist beispielsweise ein Parkplatzverwaltungsserver, der insbesondere die Vorrichtung zum assistierten Führen eines Fahrzeugs umfasst. Somit kann in vorteilhafter Weise der Parkplatzverwaltungsserver, der einen Betrieb des Parkplatzes verwaltet und überwacht, effektive Gegenmaßnahmen ermitteln und/oder planen und/oder durchführen und/oder koordinieren, um das aufgetretene Problem zu lösen oder zu umgehen.

Erfindungsgemäß ist vorgesehen, dass das Überwachen umfasst, dass die Ist-Trajektorie des Fahrzeugs auf eine Abweichung von der ermittelten Solltrajektorie überwacht wird. Dadurch kann insbesondere der technische Vorteil bewirkt werden, dass erkannt werden kann, ob das Fahrzeug von der ermittelten Solltrajektorie abweicht oder nicht. Abhängig von einem Ergebnis der Überwachung, also abhängig davon, ob die Ist-Trajektorie von der ermittelten Solltrajektorie abweicht, können entsprechende Gegenmaßnahmen ergriffen werden. Beispielsweise kann eine Ausgleichsroute ermittelt werden, die die Abweichung ausgleichen kann.

Die ermittelte Ausgleichsroute wird nach einer Ausführungsform über das Kommunikationsnetzwerk an das Fahrzeug gesendet, sodass das Fahrzeug mittels Abfahren der Ausgleichsroute die Abweichung ausgleichen kann. Das heißt, dass das Fahrzeug nach einer Ausführungsform eine Ausgleichsroute empfängt und ansprechend darauf seine autonome Fahrt derart anpasst, dass die Abweichung ausgeglichen wird. Dies also insbesondere dadurch, dass das Fahrzeug die empfangene Ausgleichsroute autonom abfährt.

Erfindungsgemäß ist vorgesehen, dass bei einer Abweichung ein Stoppsignal über das Kommunikationsnetzwerk an das Fahrzeug gesendet wird, so dass das Fahrzeug ansprechend auf einen Empfang des Stoppsignals stoppen kann. Dadurch wird insbesondere der technische Vorteil bewirkt, dass ein Kollisionsrisiko für das Fahrzeug deutlich reduziert oder sogar vermieden werden kann. Denn ein haltendes Fahrzeug stellt eine deutlich geringere Kollisionsgefahr dar als ein fahrendes Fahrzeug. Insbesondere kann die Zeit genutzt werden, in welcher das Fahrzeug hält, um eine Ausgleichsroute zu ermitteln und diese an das Fahrzeug zu senden. Nach einem Empfang der Ausgleichsroute ist nach einer Ausführungsform vorgesehen, dass das Fahrzeug seine autonome Fahrt fortsetzt. Dies insbesondere mittels eines autonomen Abfahrens der Ausgleichsroute.

In einer anderen Ausführungsform ist vorgesehen, dass eine Einparkroute zum Einparken und/oder eine Ausparkroute zum Ausparken in respektive aus einer Parkposition abhängig von dem Fahrzeugtyp ermittelt und über das Kommunikationsnetzwerk an das Fahrzeug gesendet wird respektive werden, so dass das Fahrzeug in die respektive aus der Parkposition autonom einparken respektive autonom ausparken kann.

Dadurch wird insbesondere der technische Vorteil bewirkt, dass das Fahrzeug selbst nicht notwendigerweise einen Parkassistenten aufweisen muss. Das heißt also, dass das Fahrzeug selbst keine autonome Parkfunktionalität aufweisen muss. Denn die Route, die benötigt wird, damit das Fahrzeug durch Abfahren dieser Route ein- oder ausparken kann, wird fahrzeugextern ermittelt. Das Fahrzeug selbst muss also kein Wissen über genaue Abmaßungen der Parkposition haben. Insbesondere muss das Fahrzeug kein Wissen über eventuelle Hindernisse im Umfeld der Parkposition haben. Das Wissen steht also fahrzeugextern zur Verfügung und wird dem Fahrzeug in Form der Ein- oder Ausparkroute über das Kommunikationsnetzwerk zur Verfügung gestellt.

Nach noch einer Ausführungsform ist vorgesehen, dass die Einparkroute respektive die Ausparkroute ferner abhängig von zumindest einem der folgenden Fahrzeugparameter ermittelt werden: Radstand, Höhe, Breite, Länge, Masse, Funktionsumfang eines Fahrerassistenzsystems, Funktionsumfang einer Umfeldsensorik, maximaler Radeinschlagwinkel, Wendekreis, Ungenauigkeit eines Fahrerassistenzsystems und Ungenauigkeit einer Umfeldsensorik.

Nach einer Ausführungsform ist eine Umfeldsensorik vorgesehen, insbesondere umfasst das Fahrzeug eine Umfeldsensorik, vorzugsweise umfasst die Vorrichtung zum Betreiben eines Fahrzeugs eine Umfeldsensorik. Eine Umfeldsensorik umfasst insbesondere einen oder mehrere der folgenden Umfeldsensoren: Radarsensor, Lidarsensor, Ultraschallsensor, Lasersensor und Videosensor.

Gemäß einer weiteren Ausführungsform ist vorgesehen, dass, wenn während der Überwachung ein Hindernis für das Fahrzeug detektiert wird, eine Umfahrroute zum Umfahren des Hindernisses ermittelt wird, die über das Kommunikationsnetzwerk an das Fahrzeug übermittelt wird, so dass das Fahrzeug basierend auf der Umfahrroute um das Hindernis autonom herumfahren kann. Dadurch wird insbesondere der technische Vorteil bewirkt, dass Hindernisse, die eine abzufahrende Strecke blockieren können, umfahren werden können. Dadurch kann insbesondere ein Kollisionsrisiko verringert werden. Insbesondere kann dadurch ein effizienter Verkehrsfluss bewirkt werden.

Nach noch einer Ausführungsform ist vorgesehen, dass die Solltrajektorie zumindest eine der folgenden Orte auf dem Parkplatz umfasst: Abgabeposition, an welcher ein Fahrer des Fahrzeugs sein Fahrzeug für einen autonomen Parkvorgang abgeben kann, Parkposition, in welcher das Fahrzeug auf dem Parkplatz parkt, Abholposition, an welcher ein Fahrer des Fahrzeugs nach Ende eines autonomen Parkvorgangs abholen kann.

Das heißt also, dass abhängig davon, welche der vorstehend genannten Orte die Solltrajektorie umfasst, das Fahrzeug mittels des autonomen Abfahrens der Solltrajektorie von der Abgabeposition zu der Parkposition autonom fahren kann. Insbesondere kann das Fahrzeug dort autonom, also in die Parkposition, einparken. Insbesondere kann das Fahrzeug aus der Parkposition ausparken.

Insbesondere kann das Fahrzeug autonom von der Parkposition zu der Abholposition fahren, die beispielsweise der Abgabeposition entspricht.

Das heißt also, dass durch das Abfahren der Solltrajektorie ein automatischer Parkvorgang, ein sogenanntes Automatic Valet Parking (AVP), bewirkt werden kann.

Hierbei wird das Fahrzeug bei seiner autonomen Fahrt so weit assistiert, insofern dem Fahrzeug die abzufahrende Solltrajektorie über das Kommunikationsnetzwerk übermittelt wird. Das Fahrzeug fährt selbstständig, also autonom, auf dem Parkplatz basierend auf der übermittelten Solltrajektorie. Es findet hier insbesondere keine Fernsteuerung des Fahrzeugs statt.

In einer anderen Ausführungsform ist vorgesehen, dass Informationen betreffend sich innerhalb des Parkplatzes befindende mobile und/oder stationäre Objekte über das Kommunikationsnetzwerk an das Fahrzeug gesendet werden, so dass das Fahrzeug diese Informationen für seine autonome Fahrt auf dem Parkplatz berücksichtigen kann. Dadurch wird insbesondere der technische Vorteil bewirkt, dass eine effiziente autonome Navigation oder autonome Fahrt des Fahrzeugs auf dem Parkplatz bewirkt werden kann. Insbesondere können so Objekte, die sich innerhalb des Parkplatzes befinden, vom Fahrzeug für seine autonome Fahrt berücksichtigt werden. Das Fahrzeug kann so entsprechend seine abzufahrende Solltrajektorie anpassen.

Informationen umfassen insbesondere Positionsdaten der mobilen und/oder stationären Objekte. Das heißt also, dass die Informationen Informationen umfassen, wo sich die mobilen und/oder stationären Objekte innerhalb des Parkplatzes befinden, also die Positionen der Objekte.

Informationen umfassen zum Beispiel Prädiktionsdaten, die den mobilen Objekten zugeordnet sind. Prädiktionsdaten entsprechen einer zukünftigen, also prädizierten, Bewegung dieser mobilen Objekte. Basierend darauf kann dann das Fahrzeug wissen, wohin sich die mobilen Objekte bewegen werden.

Ein mobiles Objekt im Sinne der vorliegenden Erfindung kann auch als ein dynamisches Objekt bezeichnet werden. Ein stationäres Objekt im Sinne der vorliegenden Erfindung kann auch als ein statisches Objekt bezeichnet werden. Statische Objekte sind beispielsweise Teil einer Infrastruktur des Parkplatzes. Solch eine Infrastruktur umfasst beispielsweise eine Schranke, ein Gebäude, einen Pfeiler oder Bordsteinkanten. Mobile oder dynamische Objekte sind beispielsweise Personen, Tiere oder weitere Fahrzeuge, die sich auf oder innerhalb des Parkplatzes bewegen. Zum Beispiel wird ein abgestelltes oder ein geparktes Fahrzeug als ein mobiles Objekt definiert, obwohl es sich nicht bewegt. Denn es weist eine Geschwindigkeit auf, die während des Parkens 0 m/s beträgt. Obwohl eine Infrastruktur des Parkplatzes ebenfalls eine Geschwindigkeit von 0 m/s aufweist, wird diese Infrastruktur nicht als ein mobiles Objekt definiert, sondern als ein statisches Objekt. Denn ein Fahrzeug kann eine Geschwindigkeit größer 0 m/s aufweisen, sich also bewegen. Dies kann die Infrastruktur des Parkplatzes nicht. Daher ist zum Beispiel vorgesehen, dass die statischen Objekte ausschließlich die Infrastruktur des Parkplatzes umfassen.

Das heißt, dass ein mobiles Objekt ein Objekt bezeichnet, welches sich bewegen oder fortbewegen kann, also beweglich ist. Ein Objekt muss sich also nicht zwangsläufig bewegen, um als mobiles Objekt definiert oder klassifiziert zu werden. Im Gegensatz dazu bezeichnet ein statisches Objekt ein Objekt, welches sich nicht bewegen kann, also nicht beweglich ist.

Nach einer Ausführungsform ist vorgesehen, dass dem oder den mobilen und/oder stationären Objekten zugeordnete Positionsdaten vom Fahrzeug über das Kommunikationsnetzwerk empfangen werden, so dass das Fahrzeug basierend auf den zukünftigen Bewegungen des oder der mobilen Objekte auf dem Parkplatz autonom navigiert oder fährt. Es werden also vorzugsweise die Positionsdaten an das Fahrzeug über das Kommunikationsnetzwerk gesendet.

Dadurch wird insbesondere der technische Vorteil bewirkt, dass eine verbesserte und effizientere Navigation des Fahrzeugs auf dem Parkplatz ermöglicht ist. Denn nun können Positionen der mobilen und/oder stationären Objekte für die Navigation oder für die Fahrt, also insbesondere für die Routenplanung oder Trajektorienermittlung, berücksichtigt werden. Dies kann in vorteilhafter Weise ein Kollisionsrisiko mit den Objekten verringern oder sogar ganz vermeiden.

Nach einer Ausführungsform ist vorgesehen, dass dem oder den mobilen Objekten zugeordnete Prädiktionsdaten von zukünftigen Bewegungen des oder der mobilen Objekte vom Fahrzeug über das Kommunikationsnetzwerk empfangen werden, so dass das Fahrzeug basierend auf den zukünftigen Bewegungen des oder der mobilen Objekte auf dem Parkplatz autonom navigiert.

Dadurch wird insbesondere der technische Vorteil bewirkt, dass eine verbesserte und effizientere Navigation des Fahrzeugs auf dem Parkplatz ermöglicht ist. Denn nun können auch zukünftige Bewegungen der mobilen Objekte für die Navigation, also insbesondere für die Routenplanung, berücksichtigt werden. Dies kann in vorteilhafter Weise ein Kollisionsrisiko mit den mobilen Objekten verringern oder sogar ganz vermeiden.

In einer weiteren Ausführungsform ist vorgesehen, dass die Solltrajektorie als ein Solltrajektorienschlauch gebildet ist, so dass das Fahrzeug bei seiner autonomen Fahrt auf dem Parkplatz innerhalb des Solltrajektorienschlauchs fahren kann. Das heißt also, dass anstelle der Formulierung "Solltrajektorie" auch die Formulierung "Solltrajektorienschlauch" verwendet werden kann, wenn die Solltrajektorie als ein solcher Solltrajektorienschlauch ausgebildet ist. Das heißt also, dass nach einer Ausführungsform ein Solltrajektorienschlauch vorgesehen ist. Ein solcher Solltrajektorienschlauch ist also ein Korridor, innerhalb welchem ein Fahrzeug autonom fahren oder navigieren soll respektive kann. Das heißt also, dass ein Solltrajektorienschlauch eine Vielzahl an Solltrajektorien umfasst. Jede Trajektorie, die innerhalb des Solltrajektorienschlauchs liegt, ist also eine mögliche Solltrajektorie, die das Fahrzeug abfahren soll respektive kann. Der Begriff "Solltrajektorie" umfasst im Lichte der vorliegenden Erfindung nicht nur eine Solltrajektorie, sondern auch mehrere Soll-Trajektorien, die innerhalb eines Solltrajektorienschlauchs liegen.

Nach einer Ausführungsform ist vorgesehen, dass die Vorrichtung zum assistierten Führen eines Fahrzeugs ausgebildet ist, das Verfahren zum assistierten Führen eines Fahrzeugs aus- oder durchzuführen.

In einer anderen Ausführungsform ist vorgesehen, dass die Vorrichtung zum Betreiben eines Fahrzeugs ausgebildet oder eingerichtet ist, das Verfahren zum Betreiben eines Fahrzeugs aus- oder durchzuführen.

Nach noch einer Ausführungsform ist vorgesehen, dass das Fahrzeug eingerichtet oder ausgebildet ist, das Verfahren zum Betreiben eines Fahrzeugs aus- oder durchzuführen.

Nach einer Ausführungsform ist vorgesehen, dass die Parkposition abhängig von dem Fahrzeugtyp ermittelt wird. Dadurch kann insbesondere der technische Vorteil bewirkt werden, dass das Fahrzeug auf dem Parkplatz in einer für ihn optimierten Parkposition passt. Denn nicht jeder Fahrzeugtyp passt üblicherweise in jede Parkposition gleich gut. So kann zum Beispiel eine Säule nahe einer Parkposition das Einparken oder das Ausparken von einem Geländewagen deutlich erschweren, wohingegen ein Kleinwagen damit in der Regel keine Probleme hat.

In einer Ausführungsform ist vorgesehen, dass die Parkposition abhängig von zumindest einem der folgenden Fahrzeugparameter ermittelt wird: Radstand, Höhe, Breite, Länge, Masse, Funktionsumfang eines Fahrerassistenzsystems, Funktionsumfang einer Umfeldsensorik, maximaler Radeinschlagwinkel, Wendekreis, Ungenauigkeit eines Fahrerassistenzsystems und Ungenauigkeit einer Umfeldsensorik. Dadurch kann noch passender die Parkposition für das Fahrzeug ausgewählt werden.

In einer Ausführungsform umfasst das Ermitteln der Parkposition ein Auswählen einer Parkposition aus einer Vielzahl von Parkpositionen des Parkplatzes.

Nach einer Ausführungsform umfasst die Vorrichtung zum assistierten Führen eines Fahrzeugs das Überwachungssystem.

Nach einer Ausführungsform ist vorgesehen, dass das Fahrzeug basierend auf der digitalen Karte und auf der Solltrajektorie eine optimierte Solltrajektorie ermittelt und basierend auf der optimierten Solltrajektorie autonom auf dem Parkplatz fährt. Das heißt, dass nach dieser Ausführungsform zum Beispiel vorgesehen ist, dass die Vorrichtung zum assistierten Führen eines Fahrzeugs die Solltrajektorie als einen spezifischen Vorschlag für eine mögliche Solltrajektorie ermittelt und diesen Vorschlag an das Fahrzeug übermittelt. Das Fahrzeug, also insbesondere die Vorrichtung zum Betreiben eines Fahrzeugs, verwendet vorzugsweise diesen spezifischen Vorschlag, um basierend darauf eine eigene Solltrajektorie, als die optimierte Solltrajektorie bezeichnet, zu ermitteln (dies beispielsweise mittels der Führungseinrichtung). Das heißt, dass die vorgeschlagene Solltrajektorie beispielsweise als Referenz dienen kann, um gegebenenfalls fahrzeuginterne Fehler zu finden und/oder zu minimieren.

In einer Ausführungsform ist die Vorrichtung zum assistierten Führen eines Fahrzeugs von einem Parkplatzverwaltungssystem umfasst.

In einer Ausführungsform ist vorgesehen, dass, wenn das Fahrzeug ein während der Fahrt auftretendes Problem detektiert, das Fahrzeug das Problem über das Kommunikationsnetzwerk an einen Teilnehmer des Kommunikationsnetzwerks meldet.

Gemäß einer Ausführungsform ist vorgesehen, dass, wenn das Fahrzeug eine Umfahrroute zum Umfahren eines Hindernisses über das Kommunikationsnetzwerk empfängt, das Fahrzeug seine autonome Fahrt an das Hindernis derart anpasst, dass das Fahrzeug basierend auf der Umfahrroute autonom um das Hindernis fährt.

Nach einer Ausführungsform ist vorgesehen, dass, wenn das Fahrzeug Informationen betreffend sich innerhalb des Parkplatzes befindende mobile und/oder stationäre Objekte über das Kommunikationsnetzwerk empfängt, das Fahrzeug diese Informationen für seine autonome Fahrt auf dem Parkplatz berücksichtigt und gegebenenfalls seine autonome Fahrt entsprechend anpasst.

In einer anderen Ausführungsform ist vorgesehen, dass die Vorrichtung zum assistierten Führen eines Fahrzeugs, also insbesondere das Parkplatzmanagementsystem, die Position und/oder Ausmaße von anderen Fahrzeugen und/oder Personen übermittelt, dies insbesondere dauernd oder kontinuierlich.

Die Information betreffend der Objekte umfasst also zum Beispiel Ausmaße oder Abmessungen der anderen Fahrzeuge und/oder Personen, also allgemein der Objekte.

Das Überwachungssystem umfasst nach einer Ausführungsform eine oder mehrere Videokameras und/oder einen mehrere Radarsensoren und/oder einen oder mehrere Ultraschallsensoren und/oder einen oder mehrere Lidarsensoren und/oder einen oder mehrere Lasersensoren und/oder eine oder mehrere Lichtschranken und/oder einen oder mehrere Türöffnungssensoren.

In einer Ausführungsform umfasst die Vorrichtung zum assistierten Führen eines Fahrzeugs das Überwachungssystem.

Funktionalitäten der Verfahren ergeben sich analog aus entsprechenden Funktionalitäten der Vorrichtungen und umgekehrt. Das heißt also, dass sich Verfahrensmerkmale analog aus entsprechenden Vorrichtungsmerkmalen und umgekehrt ergeben. Das heißt also insbesondere, dass, wenn ein Merkmal im Zusammenhang mit dem Verfahren oder der Vorrichtung zum assistierten Führen eines Fahrzeugs beschrieben ist, dieses Merkmal analog in Ausführungsformen des Verfahrens und der Vorrichtung zum Betreiben eines Fahrzeugs vorgesehen sein kann und umgekehrt.

Die Erfindung wird im Folgenden anhand von bevorzugten Ausführungsbeispielen näher erläutert. Hierbei zeigen
Fig. 1 ein Ablaufdiagramm eines Verfahrens zum assistierten Führen eines Fahrzeugs,
Fig. 2 eine Vorrichtung zum assistierten Führen eines Fahrzeugs,
Fig. 3 ein Ablaufdiagramm eines Verfahrens zum Betreiben eines Fahrzeugs,
Fig. 4 eine Vorrichtung zum Betreiben eines Fahrzeugs,
Fig. 5 ein Parksystem für Fahrzeuge und
Fig. 6 ein Fahrzeug.

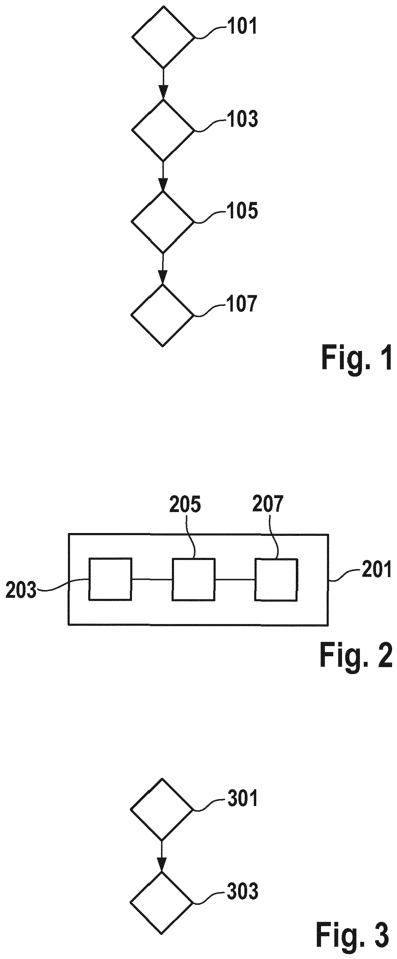

Fig. 1 zeigt ein Ablaufdiagramm eines Verfahrens zum assistierten Führen eines Fahrzeugs.

In einem Schritt 101 ist vorgesehen, dass eine auf einem Parkplatz abzufahrende Solltrajektorie für das Fahrzeug abhängig von einem Fahrzeugtyp des Fahrzeugs ermittelt wird. Die ermittelte Solltrajektorie wird in einem Schritt 103 an das Fahrzeug über ein Kommunikationsnetzwerk gesendet. Ferner wird gemäß einem Schritt 105 eine digitale Karte des Parkplatzes an das Fahrzeug über das Kommunikationsnetzwerk gesendet. Dadurch kann also in vorteilhafter Weise das Fahrzeug basierend auf der Solltrajektorie und auf der digitalen Karte autonom auf dem Parkplatz fahren.

In einem Schritt 107 ist vorgesehen, dass das Fahrzeug während seiner autonomen Fahrt auf dem Parkplatz mittels eines fahrzeugexternen Überwachungssystems überwacht wird.

Dass das Fahrzeug während seiner autonomen Fahrt auf dem Parkplatz überwacht wird, heißt insbesondere, dass ein Ein- und/oder Ausparkvorgang des Fahrzeugs in respektive aus einer Parkposition überwacht wird. Insbesondere wird eine Fahrt von der Abgabeposition zu der Parkposition überwacht. Vorzugsweise wird eine Fahrt von der Parkposition zu der Abholposition überwacht, die nach einer Ausführungsform identisch mit der Abgabeposition ist.

Fig. 2 zeigt eine Vorrichtung 201 zum assistierten Führen eines Fahrzeugs.

Die Vorrichtung 201 umfasst einen Prozessor 203, der ausgebildet ist, eine auf einem Parkplatz abzufahrende Solltrajektorie für das Fahrzeug abhängig von einem Fahrzeugtyp des Fahrzeugs zu ermitteln. Die Vorrichtung 201 umfasst ferner eine Kommunikationsschnittstelle 205, die ausgebildet ist, die ermittelte Solltrajektorie und eine digitale Karte des Parkplatzes an das Fahrzeug über ein Kommunikationsnetzwerk zu senden. Dadurch kann in vorteilhafter Weise das Fahrzeug basierend auf der Solltrajektorie und auf der digitalen Karte autonom auf dem Parkplatz fahren.

Die Vorrichtung 201 umfasst des Weiteren eine Steuerungseinrichtung 207 zum Steuern eines fahrzeugexternen Überwachungssystems derart, dass das Fahrzeug während seiner autonomen Fahrt auf dem Parkplatz mittels des fahrzeugexternen Überwachungssystems überwacht wird.

Fig. 3 zeigt ein Verfahren zum Betreiben eines Fahrzeugs.

In einem Schritt 301 ist vorgesehen, dass das Fahrzeug über ein Kommunikationsnetzwerk eine auf einem Parkplatz abzufahrende und von einem Fahrzeugtyp des Fahrzeugs abhängige Solltrajektorie und eine digitale Karte des Parkplatzes empfängt. Dies gemäß einem Schritt 301. Gemäß einem Schritt 303 ist vorgesehen, dass das Fahrzeug basierend auf der Solltrajektorie und auf der digitalen Karte autonom auf dem Parkplatz fährt.

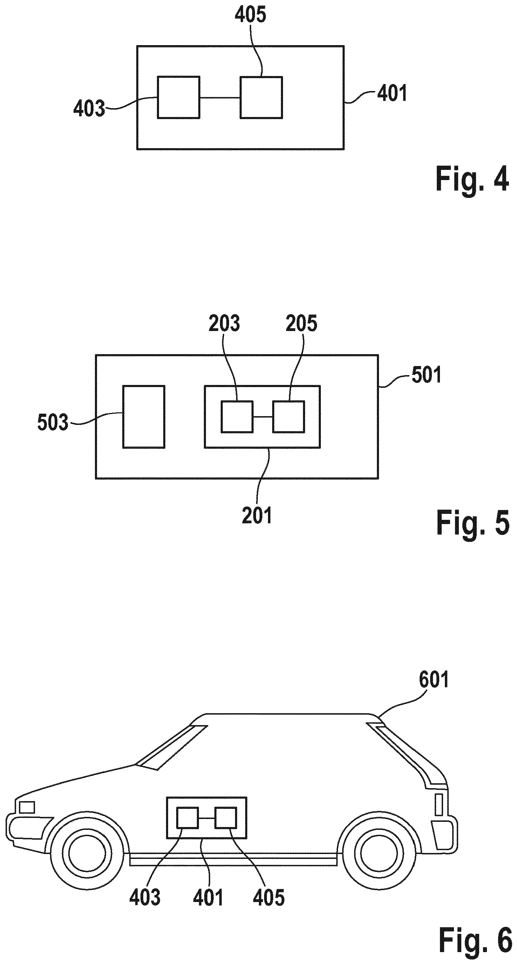

Fig. 4 zeigt eine Vorrichtung 401 zum Betreiben eines Fahrzeugs.

Die Vorrichtung 401 umfasst eine Kommunikationsschnittstelle 403, die ausgebildet ist, über ein Kommunikationsnetzwerk eine auf einem Parkplatz abzufahrende und von einem Fahrzeugtyp des Fahrzeugs abhängige Solltrajektorie und eine digitale Karte des Parkplatzes zu empfangen. Die Vorrichtung 401 umfasst des Weiteren eine Führungseinrichtung 405 zum Führen des Fahrzeugs, die ausgebildet ist, das Fahrzeug basierend auf der Solltrajektorie und auf der digitalen Karte autonom auf dem Parkplatz zu führen.

Fig. 5 zeigt ein Parksystem 501 für Fahrzeuge, wobei das Parksystem 501 einen Parkplatz 503 und die Vorrichtung 201 der Fig. 2 umfasst.

Fig. 6 zeigt ein Fahrzeug 601, welches die Vorrichtung 401 der Fig. 4 umfasst.

Zusammenfassend stellt die Erfindung insbesondere und unter anderem ein effizientes und technisches Konzept bereit, mittels welchen ein autonomes Valet Parking mit Fahrzeugen effizient und verbessert durchgeführt werden kann. Die erfindungsgemäße Idee besteht insbesondere darin, dass das Fahrzeug autonom basierend auf einer digitalen Karte, insbesondere auf einer hochgenauen digitalen Karte, des Parkplatzes fährt. Daher wird dem Fahrzeug eine solche digitale Karte über das Kommunikationsnetzwerk zur Verfügung gestellt. Ein weiterer erfindungsgemäßer Gedanke liegt insbesondere in der Überwachung der autonomen Fahrt des Fahrzeugs, insbesondere des Ein-/Ausparkvorgangs, mittels des fahrzeugexternen Überwachungssystems. So kann also insbesondere eine Parkplatzverwaltung, also ein Parkplatzmanagement, die autonome Fahrt und den Ein-/Ausparkvorgang des Fahrzeugs überwachen und bei Bedarf, also bei Fehlern oder Problemen, eingreifen. Ein weiterer erfindungsgemäßer Gedanke liegt insbesondere auch darin, dass eine konkret für das Fahrzeug zugeschnittene abzufahrende Solltrajektorie ermittelt wird.

Nach einer Ausführungsform ist vorgesehen, dass die Vorrichtung zum assistierten Führen eines Fahrzeugs, die insbesondere von einem Parkplatzverwaltungssystem oder einem Parkplatzmanagementsystem umfasst sein kann, die Solltrajektorie oder auch einen Solltrajektorienschlauch speziell für das Fahrzeug (zum Beispiel "Audio A8, Modell 2011") berechnet oder ermittelt.

Nach einer weiteren Ausführungsform ist vorgesehen, dass die Vorrichtung zum assistierten Führen eines Fahrzeugs, also insbesondere das Parkplatzmanagementsystem, die Trajektorie oder den Trajektorienschlauch dem Fahrzeug als Leitfahrt übermittelt. Leitfahrt bedeutet hier insbesondere, dass das Fahrzeug die übermittelte Solltrajektorie oder den übermittelten Solltrajektorienschlauch als Basis dafür nimmt, eine optimierte Solltrajektorie oder einen optimierten Solltrajektorienschlauch zu berechnen oder ermitteln, basierend auf welcher respektive welchem das Fahrzeug dann letztlich autonom auf dem Parkplatz fährt.

In einer Ausführungsform ist vorgesehen, dass die Vorrichtung zum assistierten Führen eines Fahrzeugs, insbesondere das Parkplatzmanagementsystem, die digitale Karte, insbesondere die hochgenaue Karte, des Parkplatzes und vorzugsweise gegebenenfalls notwendige Zusatzdaten, zum Beispiel Informationen über mobile und/oder stationäre Objekte, die sich innerhalb des Parkplatzes befinden, an das Fahrzeug übermittelt.

In einer anderen Ausführungsform ist vorgesehen, dass die Vorrichtung zum assistierten Führen eines Fahrzeugs, also insbesondere das Parkplatzmanagementsystem, die Position und/oder Ausmaße von anderen Fahrzeugen und/oder Personen übermittelt, dies insbesondere dauernd oder kontinuierlich.

Die Information umfasst also zum Beispiel Ausmaße oder Abmessungen der anderen Fahrzeuge und/oder Personen.

In einer weiteren Ausführungsform ist vorgesehen, dass das Fahrzeug auf Basis der übermittelten Solltrajektorie oder des übermittelten Solltrajektorienschlauchs, der digitalen Karte, insbesondere der hochgenauen Karte, der Positionen von anderen Fahrzeugen und/oder Personen selbstständig, also autonom, den aktuell optimalen Weg berechnet oder ermittelt und diesen dann auch autonom abfährt, sowie insbesondere ein- und/oder ausparkt.

In einer weiteren Ausführungsform ist vorgesehen, dass die Vorrichtung zum assistierten Führen eines Fahrzeugs, also insbesondere das Parkplatzmanagementsystem, die Aktionen, also insbesondere die autonome Fahrt, des Fahrzeugs überwacht. Dies insbesondere mittels eines fahrzeugexternen Überwachungssystems.

In einer weiteren Ausführungsform ist vorgesehen, dass die Vorrichtung zum assistierten Führen eines Fahrzeugs, insbesondere das Parkplatzmanagementsystem, bei selbst erkannten und/oder vom Fahrzeug gemeldeten Problemen (zum Beispiel zwei Fahrzeuge behindern sich; Personen rennen in den Fahrweg des Fahrzeugs; Ungenauigkeiten beim Abfahren des Weges (also eine Abweichung der Ist- von der Solltrajektorie); Fahrzeug verliert seine Lokalisierung usw.) eingreift. Dies insbesondere dadurch, dass zum Beispiel ein Stoppsignal an das Fahrzeug gesendet wird. Dies insbesondere dadurch, dass zum Beispiel eine neue Solltrajektorie ermittelt oder ein neuer Solltrajektorienschlauch ermittelt und über das Kommunikationsnetzwerk an das Fahrzeug übermittelt wird.

Die Vorteile des erfindungsgemäßen Konzepts liegen insbesondere darin, dass durch die Kombination der einzelnen Merkmale zumindest folgende Vorteile erreicht oder bewirkt werden können:
Eine sehr viel höhere Robustheit.
Eine sehr viel höhere Genauigkeit.
Eine sehr viel kleinere Fehleranfälligkeit.
Weniger Unfälle und/oder weniger Kollisionen.
Dies insbesondere im Vergleich zu bereits bekannten Parksystemen.

## Patentansprüche

1. Verfahren zum assistierten Führen eines Fahrzeugs (601),
- wobei eine auf einem Parkplatz abzufahrende Solltrajektorie für das Fahrzeug (601) abhängig von einem Fahrzeugtyp des Fahrzeugs (601) ermittelt (101) wird,
- wobei die ermittelte Solltrajektorie an das Fahrzeug (601) über ein Kommunikationsnetzwerk gesendet (103) wird,
- wobei eine digitale Karte des Parkplatzes an das Fahrzeug (601) über das Kommunikationsnetzwerk gesendet (105) wird,
- so dass das Fahrzeug (601) basierend auf der Solltrajektorie und auf der digitalen Karte autonom auf dem Parkplatz fahren kann,
- wobei das Fahrzeug (601) während seiner autonomen Fahrt auf dem Parkplatz mittels eines fahrzeugexternen Überwachungssystems überwacht (107) wird, **dadurch gekennzeichnet, dass** das Überwachen umfasst, dass die Ist-Trajektorie des Fahrzeugs (601) auf eine Abweichung von der ermittelten Solltrajektorie überwacht wird, wobei bei einer Abweichung ein Stoppsignal über das Kommunikationsnetzwerk an das Fahrzeug (601) gesendet wird, so dass das Fahrzeug (601) ansprechend auf einen Empfang des Stoppsignals stoppen kann.

2. Verfahren nach Anspruch 1, wobei die Solltrajektorie ferner abhängig von zumindest einem der folgenden Fahrzeugparameter ermittelt wird: Radstand, Höhe, Breite, Länge, Masse, Funktionsumfang eines Fahrerassistenzsystems, Funktionsumfang einer Umfeldsensorik, maximaler Radeinschlagwinkel, Wendekreis, Ungenauigkeit eines Fahrerassistenzsystems und Ungenauigkeit einer Umfeldsensorik.

3. Verfahren nach Anspruch 1 oder 2, wobei, wenn ein während der Fahrt auftretendes Problem detektiert wird, eine neue Solltrajektorie ermittelt wird und die neuen Solltrajektorie über das Kommunikationsnetzwerk an das Fahrzeug (601) übermittelt wird.

4. Verfahren nach einem der vorherigen Ansprüche, wobei eine Einparkroute zum Einparken und/oder eine Ausparkroute zum Ausparken in respektive aus einer Parkposition abhängig von dem Fahrzeugtyp ermittelt und über das Kommunikationsnetzwerk an das Fahrzeug (601) gesendet wird respektive werden, so dass das Fahrzeug (601) in die respektive aus der Parkposition autonom einparken respektive autonom ausparken kann.

5. Verfahren nach Anspruch 4, wobei die Einparkroute respektive die Ausparkroute ferner abhängig von zumindest einem der folgenden Fahrzeugparameter ermittelt werden: Radstand, Höhe, Breite, Länge, Masse, Funktionsumfang eines Fahrerassistenzsystems, Funktionsumfang einer Umfeldsensorik, maximaler Radeinschlagwinkel, Wendekreis, Ungenauigkeit eines Fahrerassistenzsystems und Ungenauigkeit einer Umfeldsensorik.

6. Verfahren nach einem der vorherigen Ansprüche, wobei, wenn während der Überwachung ein Hindernis für das Fahrzeug (601) detektiert wird, eine Umfahrroute zum Umfahren des Hindernisses ermittelt wird, die über das Kommunikationsnetzwerk an das Fahrzeug (601) übermittelt wird, so dass das Fahrzeug (601) basierend auf der Umfahrroute um das Hindernis autonom herumfahren kann.

7. Verfahren nach einem der vorherigen Ansprüche, wobei die Solltrajektorie zumindest eine der folgenden Orte auf dem Parkplatz umfasst: Abgabeposition, an welcher ein Fahrer des Fahrzeugs (601) sein Fahrzeug (601) für einen autonomen Parkvorgang abgeben kann, Parkposition, in welcher das Fahrzeug (601) auf dem Parkplatz parkt, Abholposition, an welcher ein Fahrer des Fahrzeugs (601) nach Ende eines autonomen Parkvorgangs abholen kann.

8. Verfahren nach einem der vorherigen Ansprüche, wobei Informationen betreffend sich innerhalb des Parkplatzes befindende mobile und/oder stationäre Objekte über das Kommunikationsnetzwerk an das Fahrzeug (601) gesendet werden, so dass das Fahrzeug (601) diese Informationen für seine autonome Fahrt auf dem Parkplatz berücksichtigen kann.

9. Verfahren nach einem der vorherigen Ansprüche, wobei die Solltrajektorie als ein Solltrajektorienschlauch gebildet ist, so dass das Fahrzeug (601) bei seiner autonomen Fahrt auf dem Parkplatz innerhalb des Solltrajektorienschlauchs fahren kann.

10. Vorrichtung (201) zum assistierten Führen eines Fahrzeugs (601), umfassend:
- einen Prozessor (203), der ausgebildet ist, eine auf einem Parkplatz abzufahrende Solltrajektorie für das Fahrzeug (601) abhängig von einem Fahrzeugtyp des Fahrzeugs (601) zu ermitteln,
- eine Kommunikationsschnittstelle (205), die ausgebildet ist, die ermittelte Solltrajektorie und eine digitale Karte des Parkplatzes an das Fahrzeug (601) über ein Kommunikationsnetzwerk zu senden, so dass das Fahrzeug (601) basierend auf der Solltrajektorie und auf der digitalen Karte autonom auf dem Parkplatz fahren kann, und
- eine Steuerungseinrichtung (207) zum Steuern eines fahrzeugexternen Überwachungssystems derart, dass das Fahrzeug (601) während seiner autonomen Fahrt auf dem Parkplatz mittels des fahrzeugexternen Überwachungssystems überwacht wird, **dadurch gekennzeichnet, dass** das Überwachen umfasst, dass die Ist-Trajektorie des Fahrzeugs (601) auf eine Abweichung von der ermittelten Solltrajektorie überwacht wird, wobei die Kommunikationsschnittstelle (205) ausgebildet ist, bei einer Abweichung ein Stoppsignal über das Kommunikationsnetzwerk an das Fahrzeug (601) zu senden, so dass das Fahrzeug (601) ansprechend auf einen Empfang des Stoppsignals stoppen kann.

11. Parksystem (501) für Fahrzeuge (601), umfassend einen Parkplatz (503) und die Vorrichtung (201) nach Anspruch 10.

12. Computerprogramm, umfassend Programmcode zur Durchführung des Verfahrens nach einem der Ansprüche 1 bis 9, wenn das Computerprogramm auf einem Computer ausgeführt wird.

## Claims

1. Method for the assisted driving of a vehicle (601),
- wherein a setpoint trajectory, to be travelled along in a car park, for the vehicle (601) is determined (101) in accordance with a vehicle type of the vehicle (601),
- wherein the determined setpoint trajectory is transmitted (103) to the vehicle (601) via a communications network,
- wherein a digital map of the car park is transmitted (105) to the vehicle (601) via the communication network,
- so that the vehicle (601) can travel autonomously in the car park on the basis of the setpoint trajectory and of the digital map,
- wherein the vehicle (601) is monitored (107) during its autonomous travel in the car park by means of a vehicle-external monitoring system, **characterized in that** the monitoring comprises that the actual trajectory of the vehicle (601) is monitored for deviation from the determined setpoint trajectory, wherein in the case of a deviation a stop signal is transmitted to the vehicle (601) via the communication network, so that the vehicle (601) can stop in response to reception of the stop signal.

2. The method as claimed in Claim 1, wherein the setpoint trajectory is also determined in accordance with at least one of the following vehicle parameters: wheel base, height, width, length, mass, functional scope of a driver assistance system, functional scope of a surroundings sensor system, maximum wheel lock angle, turning circle, inaccuracy of a driver assistance system and inaccuracy of a surrounding sensor system.

3. Method according to Claim 1 to 2, wherein if a problem occurring during travel is detected, a new setpoint trajectory is determined and the new setpoint trajectory is transferred to the vehicle (601) via the communication network.

4. Method according to one of the preceding claims, wherein a parking route for parking in a parked position and/or a parking-position-exiting route for exiting a parked position are/is determined in accordance with the type of the vehicle and are/is transmitted to the vehicle (601) via the communication network, so that the vehicle (601) can respectively park autonomously in the parked position and respectively autonomously exit the parked position.

5. Method according to Claim 4, wherein the parking route or the parked-position-exiting route is also determined in accordance with at least one of the following vehicle parameters: wheel base, height, width, length, mass, functional scope of a driver assistance system, functional scope of a surrounding sensor system, maximum wheel lock angle, turning circle, inaccuracy of a driver assistance system and inaccuracy of a surrounding sensor system.

6. Method according to one of the preceding claims, wherein, if an obstacle for the vehicle (601) is detected during the monitoring, a bypass route for bypassing the obstacle is determined, which bypass route is transferred to the vehicle (601) via the communication network so that the vehicle (601) can autonomously drive around the obstacle on the bypass route.

7. Method according to one of the preceding claims, wherein the setpoint trajectory comprises at least one of the following locations in the car park: delivery position at which a driver of the vehicle (601) can deliver his vehicle (601) for an autonomous parking process, parked position in which the vehicle (601) is parked in the car park, pick-up position at which a driver of the vehicle (601) can pick up his vehicle after the end of an autonomous parking process.

8. Method according to one of the preceding claims, wherein information relating to mobile and/or stationary objects which are located within the car park is transmitted to the vehicle (601) via the communication network, so that the vehicle (601) can take into account this information for its autonomous travel in the car park.

9. Method according to one of the preceding claims, wherein the setpoint trajectory is formed as a setpoint trajectory tube, so that during the vehicle's (601) autonomous travel it can travel in the car park within the setpoint trajectory tube. J

10. Device (201) for the assisted driving of a vehicle (601), comprising:
- a processor (203) which is designed to determine a setpoint trajectory, to be travelled along in a car park, for the vehicle (601) in accordance with a type of the vehicle (601),
- a communication interface (205) which is designed to transmit the determined setpoint trajectory and a digital map of the car park to the vehicle (601) via a communication network, so that the vehicle (601) can drive autonomously in the car park on the basis of the setpoint trajectory and of the digital map, and
- a control device (207) for controlling a vehicle-external monitoring system in such a way that during the vehicle's (601) autonomous travel in the car park it is monitored by means of the vehicle-external monitoring system, **characterized in that** the monitoring comprises that the actual trajectory of the vehicle (601) is monitored for a deviation from the determined setpoint trajectory, wherein the communication interface (205) is designed to transmit a stop signal to the vehicle (601) via the communication network in the case of a deviation, so that the vehicle (601) can stop in response to reception of the stop signal.

11. Parking system (501) for vehicles (601) comprising a car park (503) and the device (201) according to Claim 10.

12. Computer program comprising program code for carrying out the method according to one of Claims 1 to 9 when the computer program is run on a computer.

## Revendications

1. Procédé de conduite assistée d'un véhicule (601),
- dans lequel une trajectoire de consigne du véhicule (601), à parcourir dans un parking, est déterminée (101) en fonction d'un type de véhicule du véhicule (601),
- dans lequel la trajectoire de consigne déterminée est envoyée (103) au véhicule (601) par le biais d'un réseau de communication,
- dans lequel une carte numérique du parking est envoyée (105) au véhicule (601) par le biais du réseau de communication,
- de manière à ce que le véhicule (601) puisse se déplacer de manière autonome dans le parking sur la base de la trajectoire de consigne et de la carte numérique,
- dans lequel le véhicule (601) est surveillé (107) au cours de son déplacement autonome dans le parking au moyen d'un système de surveillance extérieur au véhicule, **caractérisé en ce que** la surveillance comprend la surveillance de la trajectoire réelle du véhicule (601) pour détecter un écart par rapport à la trajectoire de consigne déterminée, dans lequel un signal d'arrêt est transmis au véhicule (601) par le biais du réseau de communication en cas d'écart, de manière à ce que le véhicule (601) puisse s'arrêter en réponse à la réception du signal d'arrêt.

2. Procédé selon la revendication 1, dans lequel la trajectoire de consigne est en outre déterminée en fonction d'au moins l'un des paramètres de véhicule suivants : empattement, hauteur, largeur, longueur, masse, étendue fonctionnelle d'un système de conduite assistée, étendue fonctionnelle d'un système de capteurs d'environnement, angle de braquage maximal, rayon de braquage, imprécision d'un système de conduite assistée et imprécision d'un système de capteurs d'environnement.

3. Procédé selon la revendication 1 ou 2, dans lequel, lorsqu'un problème survenant pendant le déplacement est détecté, une nouvelle trajectoire de consigne est déterminée et la nouvelle trajectoire de consigne est transmise au véhicule (601) par le biais du réseau de communication.

4. Procédé selon l'une des revendications précédentes, dans lequel un itinéraire de manœuvre de stationnement pour la manœuvre de stationnement et/ou un itinéraire de sortie de stationnement pour la sortie de stationnement dans ou hors d'une position de stationnement est ou sont déterminé (s) en fonction du type de véhicule et est ou sont envoyé(s) au véhicule (601) par le biais du réseau de communication, de manière à ce que le véhicule (601) puisse respectivement effectuer la manœuvre de stationnement dans la position de stationnement et quitter de celle-ci de manière autonome.

5. Procédé selon la revendication 4, dans lequel l'itinéraire de manœuvre de stationnement et l'itinéraire de sortie de stationnement sont respectivement également déterminés en fonction d'au moins l'un des paramètres de véhicule suivants :
empattement, hauteur, largeur, longueur, masse, étendue fonctionnelle d'un système de conduite assistée, étendue fonctionnelle d'un système de capteurs d'environnement, angle de braquage maximal, rayon de braquage, imprécision d'un système de conduite assistée et imprécision d'un capteur d'environnement.

6. Procédé selon l'un des revendications précédentes, dans lequel, lorsqu'un obstacle se présentant au véhicule (601) est détecté pendant la surveillance, un itinéraire de contournement permettant de contourner l'obstacle est déterminé, lequel est transmis au véhicule (601) par le biais du réseau de communication, de manière à ce que le véhicule (601) puisse contourner l'obstacle de manière autonome sur la base de l'itinéraire de contournement.

7. Procédé selon l'une des revendications précédentes, dans lequel la trajectoire de consigne comprend au moins l'un des emplacements suivants dans le parking : position de dépôt à laquelle un conducteur du véhicule (601) peut déposer son véhicule (601) en vue d'une opération de stationnement autonome, position de stationnement à laquelle le véhicule (601) se gare dans le parking, position de récupération à laquelle un conducteur du véhicule (601) peut récupérer son véhicule après la fin d'une opération de stationnement autonome.

8. Procédé selon l'une des revendications précédentes, dans lequel des informations concernant des objets mobiles et/ou stationnaires se trouvant à l'intérieur du parking sont envoyées au véhicule (601) par le biais du réseau de communication afin que le véhicule (601) puisse tenir compte desdites informations pour son déplacement autonome dans le parking.

9. Procédé selon l'une des revendications précédentes, dans lequel la trajectoire de consigne est configurée sous la forme d'un tube de trajectoires de consigne de manière à ce que le véhicule (601) puisse se déplacer à l'intérieur du tube de trajectoires de consigne pendant son déplacement autonome dans le parking.

10. Dispositif (201) destiné à la conduite assistée d'un véhicule (601), comprenant :
- un processeur (203) conçu pour déterminer une trajectoire de consigne du véhicule (601), à parcourir dans un parking, en fonction d'un type de véhicule du véhicule (601),
- une interface de communication (205) conçue pour envoyer au véhicule (601) la trajectoire de consigne déterminée et une carte numérique du parking par le biais d'un réseau de communication de manière à ce que le véhicule (601) puisse se déplacer de manière autonome dans le parking sur la base de la trajectoire de consigne et de la carte numérique, et
- un dispositif de commande (207) destiné à commander un système de surveillance extérieur au véhicule de manière à ce que le véhicule (601) soit surveillé au cours de son déplacement autonome dans le parking au moyen du système de surveillance extérieur au véhicule, **caractérisé en ce que** la surveillance comprend la surveillance de la trajectoire réelle du véhicule (601) pour détecter un écart par rapport à la trajectoire de consigne déterminée, dans lequel l'interface de communication (205) est conçue pour transmettre un signal d'arrêt au véhicule (601) par le biais du réseau de communication en cas d'écart, de manière à ce que le véhicule (601) puisse s'arrêter en réponse à la réception du signal d'arrêt.

11. Système de stationnement (501) pour véhicules (601) comprenant un parking (503) et le dispositif (201) selon la revendication 10.

12. Programme d'ordinateur comprenant un code de programme destiné à mettre en œuvre le procédé selon l'une des revendications 1 à 9 lorsque le programme d'ordinateur est exécuté sur un ordinateur.
